# EUROPÄISCHE PATENTSCHRIFT

(11) **EP 1 857 614 B1**
(45) Veröffentlichungstag und Bekanntmachung des Hinweises auf die Patenterteilung: **17.03.2010**
(21) Anmeldenummer: 07105440.7
(22) Anmeldetag: 02.04.2007
(51) Int. Cl.: E04H 7/20

(54) **Wärmespeicher für adiabatische Druckluftspeicherung zum Zwecke der Energiespeicherung**
Heat storage for adiabatic compressed air storage for energy saving purposes
Accumulateur thermique pour le stockage d'air comprimé adiabatique à des fins d'économies d'énergie

(30) Priorität: 16.05.2006 DE 102006022783
(43) Veröffentlichungstag der Anmeldung: 21.11.2007
(73) Patentinhaber: Ed. Züblin Aktiengesellschaft, 70567 Stuttgart (DE)
(72) Erfinder: Hartwig, Udo, Dr., 71254, Ditzingen (DE)

(56) Entgegenhaltungen:
- CH-A- 449 231
- DE-A1- 3 545 622
- GB-A- 878 615
- GB-A- 997 882

## Beschreibung

### Technisches Gebiet

Die Erfindung betrifft die Wärmespeicherung zur Wiedererwärmung von Druckluft bei ihrer Entnahme aus einem unterirdischen großen Druckluftspeicher zur Kompensation der Abkühlung bei der Expansion des komprimierten Gases vor dem Durchgang durch die Turbine zum Zwecke der Energiegewinnung.

### Stand der Technik

Pumpspeicherkraftwerke, in denen Wasser bei einem Überschuß an elektrischer Energie auf große Höhe gepumpt wird und von dort bei Energiebedarf nach einer Gefällstrecke durch Turbinen schießt und dort seine vordem gespeicherte potentielle Energie, die am Ende der Gefällstrecke in Form kinetischer Energie vorliegt, wieder teilweise in elektrische Energie zurückverwandelt, sind vielfach bekannt und in gebirgigen Gegenden gebräuchlich. Im Flachland wären solche Pumpspeicherkraftwerke nur als extrem große und teure Ingenieurbauwerke möglich. Weltweit wird daher mit einigen wenigen unterirdischen Druckluftspeichern (z. B. Salzkavernen) ein anderer Weg zur temporären Energiespeicherung im Flachland beschritten, bei dem mit zeitenweise überschüssig produzierter elektrischer Energie Luft komprimiert wird und dann in einem großen gasdichten unterirdischen Speicher vorgehalten wird, um bei zeitweise höherem elektrischen Energieverbrauch durch Entnahme und Durchströmen einer Turbine wieder in elektrische Energie zurückverwandelt zu werden.

Beim Verdichten der Luft erhitzt sich diese. (Für eine Verdichtung ohne Wärmeaustausch, wie sie im kurzen Moment des Verdichtens näherungsweise vorliegt, weil die Zeit für einen Wärmeaustausch nicht ausreicht, gelten für Druck *p*, Volumen *V* und Temperatur *T* die adiabatischen Zustandsgleichungen *p. V^{γ}* = *const* und *T^{γ}. p^{1-γ}* = *const ,* wobei der Adiabatenkoeffizient γ als y = *Cₚ* /*cᵥ ,* das Verhältnis aus molarer Wärmekapazität bei konstantem Druck bzw. konstantem Volumen, definiert ist.)

Wird diese erhitzte Luft in die Kaverne gepumpt, so kühlt sie sich dort bis zur Entnahme mindestens teilweise ab.

Strömt diese abgekühlte Luft bei Entnahme wieder durch die Turbine und dehnt sich dabei (ebenfalls adiabatisch) aus, so kühlt sie stark ab und es kommt zu ungewünschten Vereisungen.

Um dies zu verhindern wird die Luft daher vor dem Eintritt in die Turbine wieder künstlich erhitzt, was bislang durch Verbrennen fossiler Kraftstoffe erfolgt, wodurch die Umweltbilanz negativ beeinflußt wird.

Daher wurde schon vorgeschlagen, die bei der Kompression der Luft entstandene Wärme in einen Wärmespeicher zu übertragen, und diese bei Entnahme von Gas aus dem Druckspeicher wieder auf das Gas zu übertragen, so daß das Gas formal adiabatisch gespeichert würde und keine Fremdenergie aufgewendet werden müßte, um das Gas zu erhitzen. Ein Wärmespeicher, der dies in den geforderten großen Dimensionen zur Zufriedenheit bewerkstelligen kann, ist bislang nicht bekannt. Ein Wärmespeicher, der die Merkmale des Oberbegriffes des Anspruchs 1 aufweist, wurde im Dokument DE-A-3 545 622 offenbart.

### Aufgabe der Erfindung

Aufgabe der Erfindung ist es, einen Wärmespeicher anzugeben, der in der Lage ist, bei großem Gasdurchsatz und hohem Druck (bis ca. 65 bar) hohe Temperaturen (bis ca. 650°C) vom in den Druckspeicher gepumpten Gas aufzunehmen und auch wieder auf das aus dem unterirdischen Druckspeicher entnommene Gas rückzuübertragen. Das System soll in guter Näherung adiabatisch arbeiten, es soll also im optimalen Falle keine zusätzliche Energie für eine Erwärmung des Gases aufgewendet werden müssen.

### Darstellung der Erfindung

Die Aufgabe wird durch die im Kennzeichen des Anspruchs 1 angegebenen Merkmale gelöst.

Wesentliche Merkmale der Erfindung sind:
- Der Wärmespeicher/Wärmeaustauscher ist ein druckfester Behälter, dessen Hülle (1, 7) Drücken im Bereich von 65 bar sicher standhält. Er weist mindestens eine Zuführungsleitung (12) für die heiße komprimierte Luft und mindestens eine Ableitung (13) der abgekühlten Luft aus dem Wärmetauscher in den unterirdischen Druckspeicher auf. Außerdem weist er mindestens eine Zuleitung (13) aus dem unterirdischen Druckspeicher in den Wärmespeicher auf, die auch mit der Ableitung (13) aus dem Wärmespeicher in den Druckspeicher identisch sein kann, sowie eine Ableitung (12) für die im Wärmespeicher wiedererhitzte Luft zur Turbine.
- Der Betonmantel (1) besteht großteils aus vorgespanntem hochfestem Beton. Die Vorspannung erfolgt horizontal und vertikal bevorzugt durch Spannglieder (11, 10) aus Kohlefasern.
- Im oberen Bereich des druckfesten Behälters (1) ist eine Stahlkappe (7) integriert. Sie ist abnehmbar, wodurch das Innere des Wärmespeichers für Montage, Beschickung und Wartung leichter zugänglich ist. Mindestens die Stahlkappe (7) des Wärmespeichers befindet sich oberhalb des Erdbodens, der Rest kann im Boden versenkt sein.
- Der Betonmantel (1) und die Stahlkappe (7) können gegen die Umgebung durch wärmedämmendes Material (16) thermisch isoliert sein.
- Eine durch eine hitzebeständige Schicht (3) geschützte thermisch isolierende Schicht (4) trennt das Wärmespeichermaterial (2) vom hitzeempfindlicheren Beton (1). Zwischen thermisch isolierender Schicht und Betonmantel (1)/Stahlkappe (7) befindet sich darüber hinaus, falls die thermisch isolierende Schicht nicht selbst in ausreichendem Maße thermisch isolierend wirkt, bevorzugt noch eine thermisch isolierende Schicht (5), bevorzugt aus Luft.
- Das Wärmespeichermaterial (2) hat wegen der Änderung seines Volumens bei Temperaturwechseln bevorzugt keinen direkten Kontakt zur hitzebeständigen Schicht (3), oder es sind Leerräume zwischen den einzelnen Elementen (2) vorhanden, die ausdehnungskompensierend wirken.
- Das Wärmespeichermaterial (2) liegt bevorzugt auf einer auf Stützen (18) ruhenden Decke (8), bevorzugt aus Beton.
- Im Inneren des Betonmantels (1) verläuft ein Kühlkreislauf (6) zur Kühlung der Mantelinnenfläche.

### Die Figuren zeigen eine mögliche Ausführungsform detaillierter:

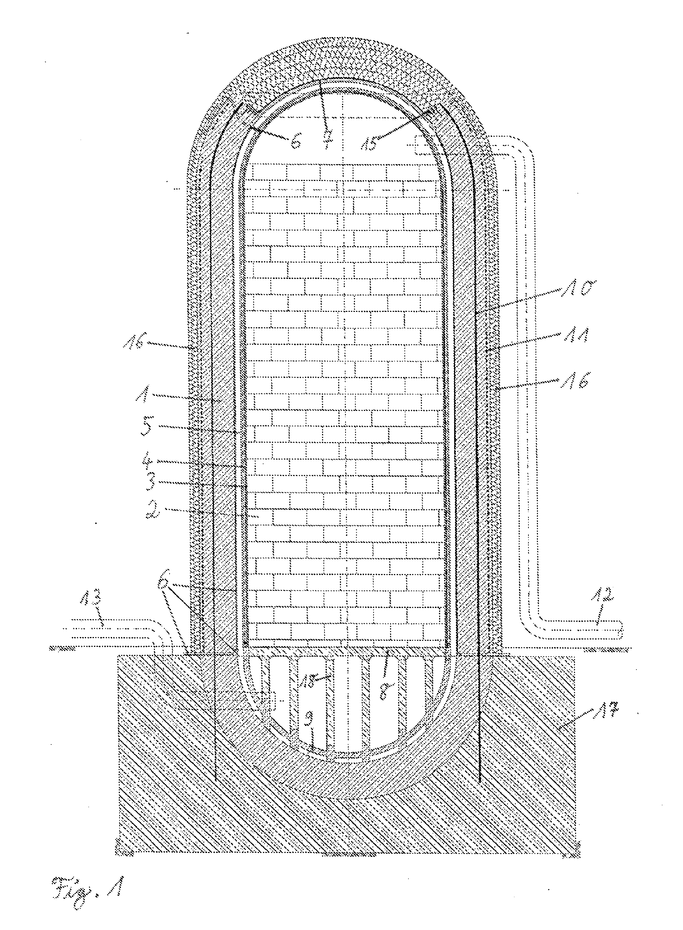

Die **Fig. 1** zeigt einen Querschnitt durch einen erfindungsgemäßen Wärmespeicher in "Medizinkapselform", dessen überwiegender Teil sich in diesem Fall oberirdisch befindet, der untere Teil (die Rundung der Kapsel) ist in ein Fundament (17) aus Beton eingegossen. Die Gesamthöhe der Kapsel des Wärmespeichers beträgt 43 m, wovon 35 m oberirdisch sind.

Der Betonmantel (1) ist 2 m stark und besteht aus hochfestem Beton C80/95, der durch Spannglieder aus Kohlefaser (11, 10) vertikal und horizontal vorgespannt ist.

An seinem oberen Ende ist der Wärmespeicher durch eine zwanzig Zentimeter dicke Stahlkappe (7) verschlossen, die lösbar an einem im Betonmantel (1) verankerten Stahlring (15) befestigt ist.

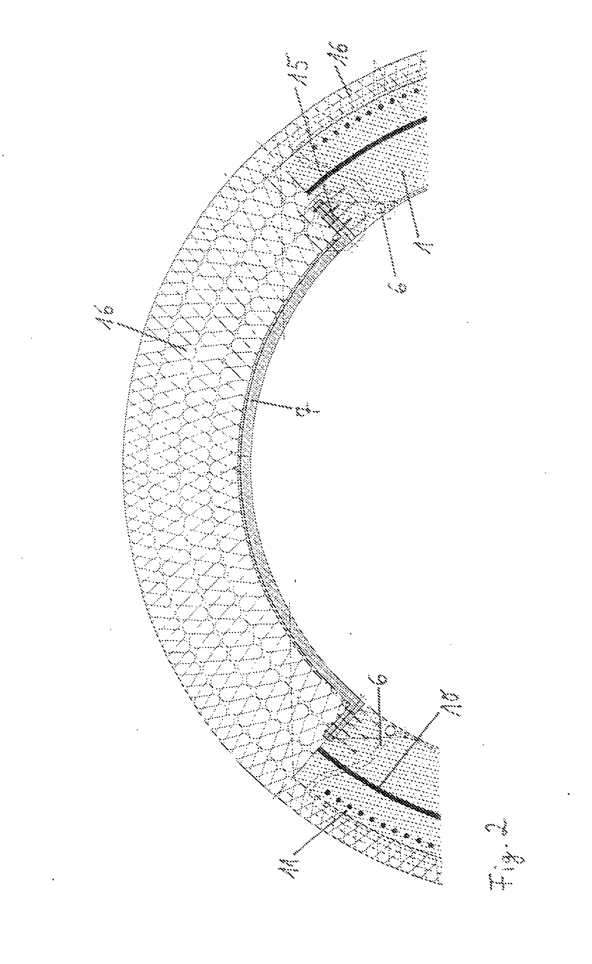

Dies ist detaillierter in **Fig. 2** dargestellt.

An seiner oberirdischen Außenseite ist der Wärmespeicher von einer 50 cm dicken Wärmedämmung (16) umgeben. Im Bereich der nur 20 Zentimeter dicken Stahlkappe (7) ist die Isolation dementsprechend 2,30 m stark. Innerhalb der äußeren Druckkapsel (1, 7) befindet sich in einem Abstand (5) von 30 cm, der mit Luft oder einem stark lufthaltigen Isoliermaterial gefüllt ist, eine von der Form ähnliche temperaturbeständige Kapsel (3, 4, 8, 9, 18).

Die temperaturbeständige Kapsel (3, 4, 8, 9, 18) besteht bevorzugt aus einem unteren Teil (9) aus Beton mit einer eingezogenen Decke (8), die durch Stützen (18) auf dem Boden (9) der temperaturbeständigen Kapsel und diese wiederum durch kurze Stützen auf der Druckkapsel (1) abgestützt ist.

Der Teil (3, 4) der temperaturbeständigen Kapsel oberhalb der eingezogenen Decke (8) ist zweischichtig aufgebaut. Sie besteht aus einer äußeren 20 cm starken Schicht (4) aus Porenbetonsteinen, die gemauert sind und mit Nut und Feder ineinandergreifen. Nach innen schließt sich an diese Schicht eine 10 cm starke Schicht (3) aus hitzebeständigem Beton an. Alternativ kann auch eine einschalige Konstruktion aus hitzebeständigem Porenbeton mit erhöhten Wärmedämmeigenschaften verwendet werden.

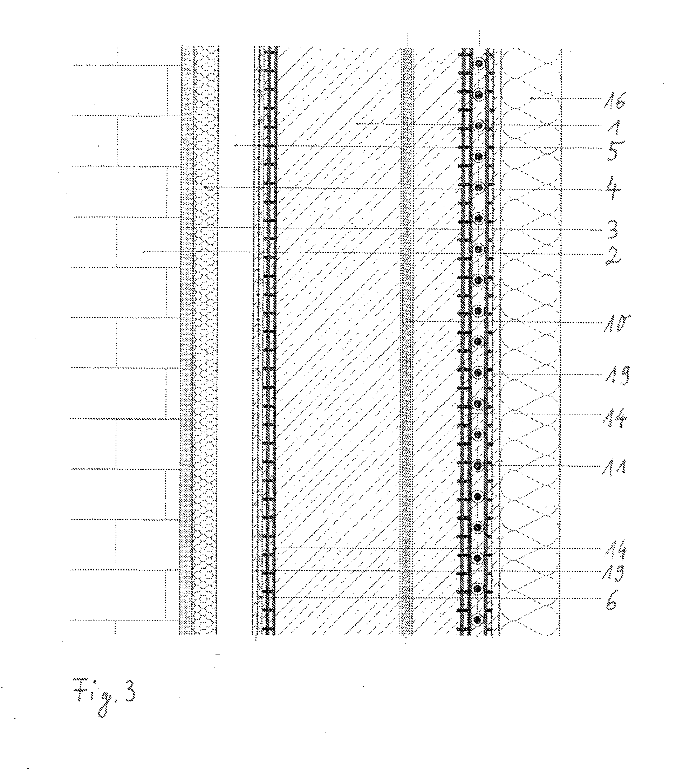

Ein möglicher Wandaufbau des erfindungsgemäßen Wärmespeichers ist mit besserer Auflösung in **Fig. 3** dargestellt.

Innerhalb der temperaturbeständigen Kapsel (3, 4) und auf der Decke (8) aus hitzebeständigem Beton sind Wärmespeicherelemente (2) aus einem keramischen Material aufgestapelt, die bevorzugt mit Nut und Feder ineinander greifen, damit die ständigen Temperaturzyklen nicht zu Verschiebungen der Elemente (2) relativ zueinander führen. Die Wärmespeicherelemente (2) weisen zum Zwecke des Wärmeaustauschs Durchführungen für das Gas auf. Wärmespeicherelemente (2) füllen ungefähr den mittleren rohrförmigen Bereich der "Medizinkapsel" aus. Die untere Rundung innerhalb der Kapsel ist der Ableitungs- und Zuleitungsbereich für komprimierte abgekühlte Luft in den Druckspeicher beziehungsweise aus dem Druckspeicher. Die obere Rundung der Kapsel ist der Zuleitungs- und Ableitungsbereich für die heiße Luft, die vom Verdichter kommt, beziehungsweise zur Turbine weitergeleitet wird.

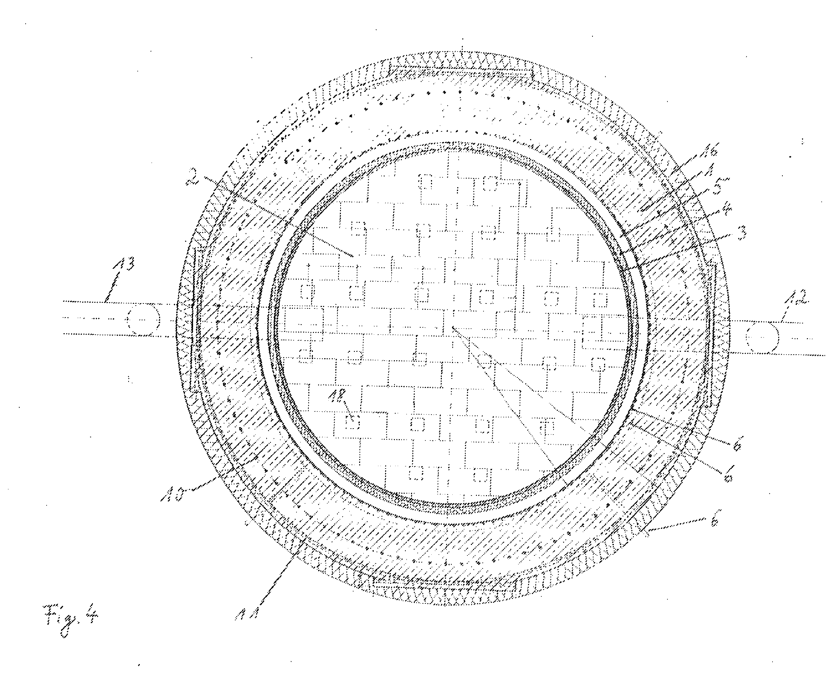

**Fig. 4** zeigt einen horizontalen Querschnitt durch einen erfindungsgemäßen Speicher.

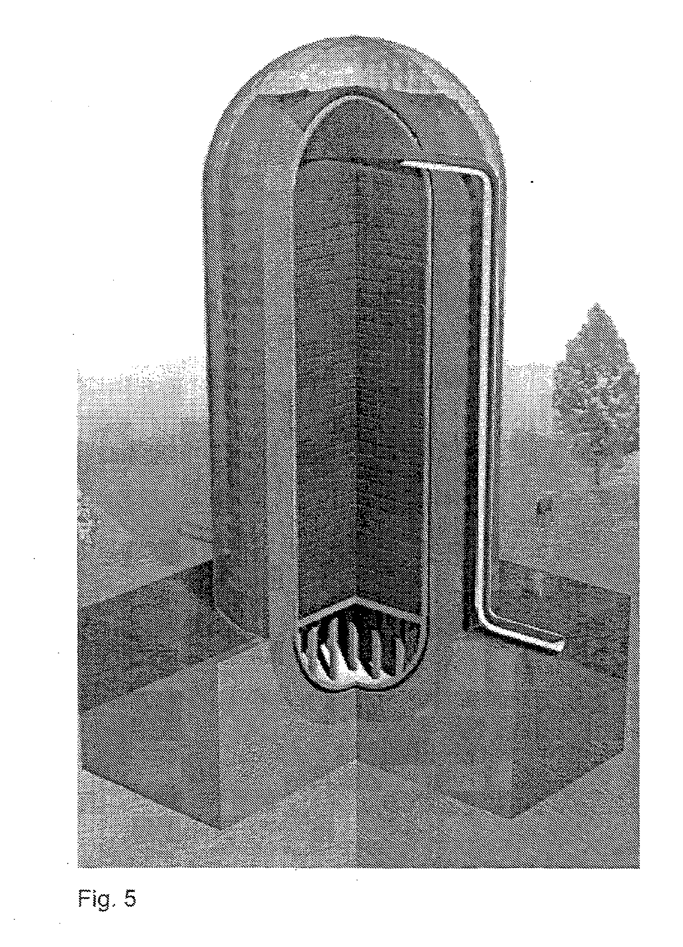

**Fig. 5** zeigt den Wärmespeicher, zeichnerisch aufgeschnitten, wie er sich in die Landschaft fügt.

### Bezugszeichenliste

- 1: Betonmantel aus hochfestem Beton
- 2: Wärmespeicherelemente
- 3: hitzebeständige Schicht
- 4: thermisch isolierende Schicht
- 5: isolierende Luftschicht oder hitzebeständiges stark lufthaltiges Isoliermaterial (z.B. Mineralwolle)
- 6: Kühlrohre
- 7: Stahlkappe
- 8: Stützdecke aus hitzefestem Beton
- 9: Fertigteile aus hitzefestem Beton
- 10: Spannglieder aus Kohlefaser, Vertikalvorspannung
- 11: Spannglieder aus Kohlefaser, Horizontalvorspannung
- 12: Zuleitung für komprimierte Luft aus dem Verdichter, gleichzeitig Ableitung für wiedererhitzte Luft aus dem Wärmespeicher
- 13: Ableitung in den Druckspeicher, gleichzeitig Entnahmeleitung aus dem Druckspeicher
- 14: Stahlbewehrung
- 15: im Mantel verankerter Stahlring
- 16: äußere Wärmedämmung
- 17: Fundament
- 18: Betonstütze
- 19: geschweißtes Stahlgewebe

## Patentansprüche

1. Großvolumiger Wärmespeicher für adiabatische Druckluftspeicherung zum Zwecke der Energiespeicherung,
**dadurch gekennzeichnet, daß** er aus zwei ineinander gestülpten Kapseln (1, 7 und 3, 4, 9) besteht, die im wesentlichen die Form eines senkrecht stehenden Rohres mit gerundeten Kappen an den Enden besitzen,
wobei die äußere Kapsel (1, 7) eine Druckkapsel darstellt, die Drücke bis zu mindestens 65 bar sicher aufnimmt, und die innere Kapsel (3, 4, 9) eine hitzebeständige Kapsel, die Temperaturen bis mindestens 650°C sicher standhält und in der sich die Wärmespeicherelemente (2) befinden,
wobei der Mantel (1, 7) der äußeren Kapsel zum überwiegenden Teil aus vorgespanntem (11, 10) Beton besteht und die Innenseite des Mantels mindestens in Nähe zu heißen Bereichen der hitzebeständigen Kapsel (3, 4, 9) durch Kühlrohre (6) gekühlt ist,
wobei sich im Zwischenraum (5) zwischen äußerer Kapsel (1, 7) und innerer Kapsel (3, 4, 9) Luft oder ein stark lufthaltiges Isolationsmaterial befindet,
wobei die Wärmespeicherelemente (2) auf einer Zwischendecke (8) innerhalb der hitzebeständigen Kapsel (3, 4, 9) aufgestapelt sind,
wobei sich innerhalb der hitzebeständigen Kapsel (3, 4, 9) im Bereich unterhalb der Zwischendecke (8) ein Zuströmungs- und Abströmungsbereich für Luft aus dem unterirdischen Druckluftspeicher befindet,
und wobei sich innerhalb der hitzebeständigen Kapsel (3, 4, 9) im Bereich oberhalb des Stapels der Wärmespeicherelemente (2) ein Zuströmungs- und Abströmungsbereich für Luft aus dem Verdichter beziehungsweise in die Energiegewinnungsanlage befindet.

2. Wärmespeicher nach Anspruch 1,
**dadurch gekennzeichnet, daß** die Druckkapsel (1, 7) im oberen Bereich als Stahlkalotte (7) ausgeführt ist und lösbar am Betonmantel (1) der Druckkapsel (1, 7) befestigt ist.

3. Wärmespeicher nach mindestens einem der Ansprüche 1 und 2,
**dadurch gekennzeichnet, daß** der Betonmantel (1) der Druckkapsel (1, 7) aus vertikal und horizontal mit Spanngliedern (10, 11) aus Kohlefasern vorgespanntem Beton besteht.

4. Wärmespeicher nach mindestens einem der Ansprüche 1 bis 3,
**dadurch gekennzeichnet, daß** die Zwischendecke (8), auf der die Wärmespeicherelemente (2) ruhen, aus hitzebeständigem Beton besteht und von Stützen (18) getragen ist, die sich auf dem Boden (9) der darunter befindlichen Kapsel abstützen, die wiederum selbst mit Stützen auf dem Boden der Druckkapsel (1, 7) abgestützt ist.

5. Wärmespeicher nach mindestens einem der Ansprüche 1 bis 4,
**dadurch gekennzeichnet, daß** die hitzebeständige Kapsel (3, 4, 9) im Bereich oberhalb der Zwischendecke (8) entweder aus mindestens zwei Schichten (3, 4) besteht, nämlich einer inneren Schicht (3) aus hitzebeständigem Beton und einer äußeren Schicht (4) aus Porenbeton, oder daß sie aus einer einzigen Schicht aus hitzebeständigem Porenbeton besteht.

6. Wärmespeicher nach mindestens einem der Ansprüche 1 bis 5,
**dadurch gekennzeichnet, daß** die Wärmespeicherelemente (2) Nut und Feder oder Fortsätze und Vertiefungen mit vergleichbaren Funktionen aufweisen, mit diesen ineinandergreifen und **dadurch** auch trotz der ständigen Temperaturänderungen unverschieblich liegen.

7. Wärmespeicher nach mindestens einem der Ansprüche 1 bis 6,
**dadurch gekennzeichnet, daß** die Druckkapsel (1, 7) mindestens in den Bereichen, die innerlich mit Warmluft in Verbindung kommen, äußerlich mit einer thermischen Isolierschicht (16) umgeben ist.

## Claims

1. A large-volume heat storage container for adiabatic compressed air storage for energy saving purposes,
**characterized in that** it consists of two interstacked capsules (1, 7 and 3, 4, 9) which essentially have the shape of a vertically positioned pipe with rounded caps at the ends, wherein the outer capsule (1, 7) is a pressure capsule that safely accepts pressures up to at least 65 bar, and the inner capsule (3, 4, 9) a heat resistant capsule that safely withstands temperatures up to at least 650°C and inside which the heat storage elements (2) are located, wherein the cover (1, 7) of the outer capsule mainly consists of prestressed (11, 10) concrete and the inside of the cover is cooled by cooling pipes (6) at least in proximity to hot areas of the heat resistant capsule (3, 4, 9), wherein air or an insulation material with a high air content is located in the space (5) between the outer capsule (1, 7) and the inner capsule (3, 4, 9), wherein the heat storage elements (2) are piled up on an intermediate ceiling (8) within the heat resistant capsule (3, 4, 9), wherein an inflow and outflow area for air from the underground compressed-air storage reservoir is located within the heat resistant capsule (3, 4, 9) in the area below the intermediate ceiling (8), and wherein an inflow and outflow area for air from the compressor or into the energy generation plant is located within the heat resistant capsule (3, 4, 9) in the area above the pile of heat storage elements (2).

2. A heat storage container according to claim 1, **characterized in that** the pressure capsule (1, 7) is constructed in the upper area as a dome-shaped steel cap (7) and removably fixed on the concrete cover (1) of the pressure capsule (1, 7).

3. A heat storage container according to at least one of claims 1 and 2, **characterized in that** the concrete cover (1) of the pressure capsule (1, 7) consists of concrete which is vertically and horizontally prestressed by means of prestressing tendons (10, 11) made of carbon fibres.

4. A heat storage container according to at least one of claims 1 to 3, **characterized in that** the intermediate ceiling (8), upon which the heat storage elements (2) rest, consists of heat resistant concrete and is borne on columns (18) which are supported on the floor (9) of the underlying capsule which is in turn supported by columns on the floor of the pressure capsule (1, 7).

5. A heat storage container according to at least one of claims 1 to 4, **characterized in that** the heat resistant capsule (3, 4, 9) in the area above the intermediate ceiling (8) either consists of at least two layers (3, 4), namely an inner layer (3) of heat resistant concrete and an outer layer (4) of aerated concrete, or **in that** it consists of a single layer of heat-resistant aerated concrete.

6. A heat storage container according to at least one of claims 1 to 5, **characterized in that** the heat storage elements (2) comprise tongues and grooves or projections and recesses with comparable functions, interengage with these and therefore remain immovably in place despite constant changes in temperature.

7. A heat storage container according to at least one of claims 1 to 6, **characterized in that** the pressure capsule (1, 7) is surrounded on the outside by a thermal insulation layer (16), at least in areas whose inside comes into contact with warm air.

## Revendications

1. Accumulateur thermique à grand volume pour le stockage d'air comprimé adiabatique à des fins d'économies d'énergie,
**caractérisé en ce qu'**il se compose de deux capsules retournées l'une dans l'autre (1, 7 et 3, 4, 9), qui pour l'essentiel possèdent la forme d'un tube posé à la verticale avec des capuchons arrondis aux extrémités, en notant que les capsules extérieures (1, 7) représentent une capsule de pression, qui admet avec fiabilité des pressions jusqu'à 65 bars au moins, et la capsule intérieure (3, 4, 9) une capsule thermorésistante qui résiste avec fiabilité à des températures d'au moins 650°C et dans laquelle se trouvent les éléments de l'accumulateur thermique (2),
tout en notant que le manteau (1, 7) de la capsule extérieure qui pour sa majeure partie se compose de béton précontraint (11, 10) et la paroi intérieure du manteau est refroidie au moins à proximité des zones très chaudes de la capsule thermorésistante (3, 4, 9) par des tuyaux de refroidissement (6), en notant que dans l'interstice (5) entre la capsule extérieure (1, 7) et la capsule intérieure (3, 4, 9) se trouve de l'air ou un matériau isolant à forte teneur en air, et que les éléments de l'accumulateur thermique (2) sont empilés sur un faux plafond (8) à l'intérieur de la capsule thermorésistante (3, 4, 9), tout en notant qu'à l'intérieur de la capsule thermorésistante (3, 4, 9) dans la zone inférieure au faux-plafond (8) se trouve une zone d'afflux et d'évacuation de l'air provenant de l'accumulateur d'air comprimé souterrain, et qu'à l'intérieur des capsules thermorésistantes (3, 4, 9) dans la zone située au-dessus de l'empilage des éléments de l'accumulateur thermique (2) se trouve une zone d'afflux et d'évacuation de l'air provenant du compresseur vers l'installation de production d'énergie.

2. Accumulateur thermique selon revendication 1, **caractérisé en ce que** la capsule de pression (1, 7) est équipé dans sa partie supérieure comme une calotte d'acier (7) et fixé de façon amovible sur le manteau de béton (1) des capsules de pression (1, 7).

3. Accumulateur thermique selon au moins une des revendications 1 et 2, **caractérisé en ce que** le manteau de béton (1) des capsules de pression (1, 7) se compose de béton précontraint à fibres de carbone avec éléments de serrage verticaux et horizontaux (10, 11).

4. Accumulateur thermique selon au moins une des revendications 1 à 3, **caractérisé en ce que** le faux plafond (8) sur lequel repose les éléments de l'accumulateur thermique (2), se compose de béton thermorésistant et est supporté par des appuis (18), qui reposent sur le fond (9) des capsules sous-jacentes, qui à son tour s'appuie avec des étais sur le fond des capsules de pression (1, 7).

5. Accumulateur thermique selon au moins une des revendications 1 à 4, **caractérisé en ce que**, les capsules thermorésistantes (3, 4, 9) se composent soit au moins de deux couches (3, 4) dans la zone au-dessus du faux plafond (8) à savoir d'une couche intérieure (3) en béton thermorésistant et d'une couche extérieure (4) en béton cellulaire ou bien qu'il se compose d'une seule couche en béton cellulaire thermorésistant.

6. Accumulateur thermique selon au moins une des revendications 1 à 5, **caractérisé en ce que** les éléments de l'accumulateur thermique (2) présentent des gorges et ressorts ou des prolongements et renfoncements aux fonctions comparables, imbriqués les uns dans les autres avec ceux-ci et reposent aussi sans permettre un déplacement malgré les variations constantes de température.

7. Accumulateur thermique selon au moins une des revendications 1 à 6, **caractérisé en ce que** les capsules de pression (1, 7) soient entourées extérieurement d'une couche d'isolation thermique (16) au moins dans les zones qui entrent en relation avec l'air chaud.
